# EUROPEAN PATENT SPECIFICATION

(11) **EP 1 912 305 B1**
(45) Date of publication and mention of the grant of the patent: **27.05.2009**
(21) Application number: 07253756.6
(22) Date of filing: 21.09.2007
(51) Int. Cl.: H02J 3/18, H02J 3/32, H02J 9/06, H01M 10/39, H01M 10/44

(54) **Control method of sodium-sulfur battery**
Steuerverfahren einer Natrium-Schwefel-Batterie
Procédé de contrôle de batterie au sodium-sulfure

(30) Priority: 27.09.2006 JP 2006262667
(43) Date of publication of application: 16.04.2008
(73) Proprietor: NGK Insulators, Ltd., Nagoya-shi, Aichi 467-8530 (JP)
(72) Inventor: Sato, Mitsuharu, Aichi-ken 467-8530 (JP)
(74) Representative: Paget, Hugh Charles Edward

(56) References cited:
- JP-A- 2003 317 808
- US-A1- 2007 200 434
- US-B2- 6 747 370

## Description

### BACKGROUND OF THE INVENTION

### 1. Field of the Invention

The present invention relates to a control method of a sodium-sulfur battery in an interconnection system where a power generation device such as a wind power generation device having a fluctuant output is combined with a power storage compensation device having a plurality of sodium-sulfur batteries to supply an electric power to a power system.

### 2. Description of Related Art

In recent years, a natural energy power generation device which produces an electric power from a wind power, a sunlight, a geothermal power and the like has been attended and put to practical use. The natural energy power generation device is a clean power generation device in which a limited resource such as petroleum is not used but an exhaustless natural energy source is used, and the device is capable of reducing emission of carbon dioxide. Therefore, corporations, autonomy communities and the like which introduce the device are increasing from a viewpoint of prevention of global warming.

However, the energy brought from the natural world fluctuates from moment to moment, and hence fluctuations of an energy output cannot be avoided, which becomes an obstacle to progress of the natural energy power generation device. Therefore, in order to eliminate this obstacle, in a case where the natural energy power generation device is employed, it is preferable to construct an interconnection (power generation) system where the natural energy power generation device is combined with a power storage compensation device including a plurality of sodium-sulfur batteries (secondary batteries) as main constituting units.

The sodium-sulfur battery has a high energy density, is capable of generating a high output in a short time, and has an excellent high-speed response. Accordingly, when the battery is provided with a bidirectional converter which controls charging and discharging, the battery has a merit that the output fluctuations generated on the order of several hundred milliseconds to several seconds in the natural energy power generation device can be compensated. Therefore, the interconnection system where the natural energy power generation device is combined with the power storage compensation device including a plurality of sodium-sulfur batteries as the constituting units is considered to be a desirable power generation system. It is to be noted that there is not present any prior art having a theme of the present invention described later, but as an example having related technical contents, Patent Document 1 can be enumerated.

[Patent Document 1] Japanese Patent Application Laid-Open No. 2003-317808

Heretofore, in the power storage compensation device including a plurality of sodium-sulfur batteries as the constituting units, control of the charging and the discharging of the plurality of sodium-sulfur batteries has been generally performed by a simple method in which the control can be collectively made. A discharge capacity of each of the sodium-sulfur batteries can be obtained by introducing a current value required for the charging or the discharging from an initially set discharge capacity into a control device such as a sequencer to perform adding or subtracting (e.g., adding in the case of the charging, subtracting in the case of the discharging) and integrating, thereby accomplishing the control.

However, when the current value is subjected to analog-digital conversion, a slight error is generated, and the error is integrated for a long time by the sequencer. Moreover, the error is not constant in each of the sodium-sulfur batteries constituting the power storage compensation device. In addition, an error is also generated during the control of the charging and the discharging by the bidirectional converter, and this error is not constant in each sodium-sulfur battery. Therefore, when the interconnection system is operated over a long period, a deviation is inevitably generated between an actual discharge capacity and a control value to be controlled by the control device in each of the respective sodium-sulfur batteries constituting the power storage compensation device. Moreover, among the sodium-sulfur batteries, fluctuations inconveniently occur in accordance with a degree of the deviation between the actual discharge capacity and the control value.

Therefore, in the above-mentioned interconnection system, to precisely control the discharge capacities (or remaining capacities) of the plurality of sodium-sulfur batteries constituting the power storage compensation device, the charging is periodically performed by a predetermined charging method, and the control value of the discharge capacity (or the remaining capacity) needs to be corrected and reset.

In a case where the sodium-sulfur batteries are used as the main constituting units of the power storage compensation device in a load equalization system which compensates for a gap between daytime power consumption and nighttime power consumption in, for example, a power system, the above-mentioned deviation and fluctuation do not raise any problem. In the load equalization system, for example, at rise of sun when nighttime (the power consumption is small) ends, the charging ends. In this case, all of the control values of the discharge capacities (or the remaining capacities) of all the sodium-sulfur batteries can be corrected and reset collectively. In consequence, the deviation and the fluctuation can be eliminated.

However, in the power storage compensation device combined with the natural energy power generation device, since it is not effective to simultaneously end the charging of all of the sodium-sulfur batteries, the control values of the discharge capacities (or the remaining capacities) cannot easily be corrected or reset. This is because the sodium-sulfur battery which has reached the end of the charging cannot be used in compensating for the fluctuating power in a charging direction until the battery is discharged as much as a constant amount. To secure a fluctuation range which can be compensated, the sodium-sulfur batteries need to be provided with a preliminary line, but this is not advisable in respect of costs.

However, since the power generated by the natural energy power generation device fluctuates, the power is frequently repeatedly input or output with respect to the power storage compensation device, and the sodium-sulfur batteries constituting the power storage compensation device are continuously repeatedly charged and discharged. Therefore, in the sodium-sulfur batteries for use in the interconnection system with the natural energy power generation device, the deviation and the fluctuation are more easily generated, and it is considered to be more difficult to precisely control the discharge capacities (or the remaining capacities) as compared with a case where the batteries are applied to the load equalization system.

When the deviation is generated between the actual discharge capacity and the control value in each of the sodium-sulfur batteries, the charging suddenly ends, and the charging cannot be continued. Alternatively, a problem occurs that the discharging suddenly ends and the discharging cannot be continued or the device stops while the output fluctuation of the natural energy power generation device is compensated. Moreover, when the degree of the deviation between the actual discharge capacity and the control value fluctuates among the sodium-sulfur batteries, it is supposed that the above-mentioned problem easily occurs as compared with a case where there is not any fluctuation.

### SUMMARY OF THE INVENTION

The present invention has been developed in view of such situations, and an object thereof is to provide means for precisely controlling discharge capacities (or remaining capacities) of sodium-sulfur batteries in an interconnection system where a natural energy power generation device in which an output fluctuates is combined with a power storage compensation device including the plurality of sodium-sulfur batteries. As a result of repeated investigations, it has been found that, in a case where the sodium-sulfur battery in which the discharge capacity is to be preferentially corrected and reset is determined among the plurality of sodium-sulfur batteries constituting the power storage compensation device and the discharge capacity is individually controlled for each specified sodium-sulfur battery, the above problem can be solved. Specifically, according to the present invention, the following means are provided.

That is, according to the present invention, there is provided a control method of a plurality of sodium-sulfur batteries, comprising: providing an interconnection system where a power generation device in which the output fluctuates is combined with a power storage compensation device to supply an electric power to a power system, the plurality of sodium-sulfur batteries comprising the power storage compensation device and compensating a fluctuation of an output of the power generation device; specifying the sodium-sulfur battery in which a discharge capacity control value is to be corrected or reset, among the plurality of sodium-sulfur batteries; correcting or resetting the discharge capacity control value of the specified sodium-sulfur battery; and successively specifying all of the plurality of sodium-sulfur batteries to repeatedly correct or reset the discharge capacity control value.

The number of the specified sodium-sulfur batteries is not limited to one, but is preferably one. In a case where one sodium-sulfur battery is specified, the discharge capacity control values of the individual sodium-sulfur batteries constituting the plurality of sodium-sulfur batteries are successively and individually corrected or reset.

To correct or reset the discharge capacity control value is to eliminate a deviation between an actual discharge capacity and a control value. In the present description, it is described that the discharge capacity control value is corrected or reset, but even in a case where it is described that the value is simply corrected or simply reset, the same meaning is indicated. If the discharge capacity can correctly be controlled, a remaining capacity can be seen. Therefore, in the present description, the remaining capacity can be replaced with the remaining capacity. The discharge capacity (or the remaining capacity) is appropriately described.

To repeatedly correct or reset the discharge capacity control value means that after all of the plurality of sodium-sulfur batteries are successively specified to return to the first specified sodium-sulfur battery, the discharge capacity control value is corrected or reset, furthermore, the batteries are successively specified again, and the correcting or the resetting of the discharge capacity control value is repeatedly performed.

In the control method of the sodium-sulfur battery according to the present invention, it is preferable that a vicinity of the end of charging or discharging is detected to correct or reset the discharge capacity control value. In this case, it is preferable that the vicinity of the end of the charging or the discharging is detected based on a voltage of the battery which is being operated. Furthermore, it is preferable that the vicinity of the end of the charging is detected in a case where a discharge capacity is larger than 0% and less than 10% of a battery rated capacity and that the vicinity of the end of the discharging is detected in a case where the discharge capacity is larger than 60% and less than 100% of the battery rated capacity.

The battery voltage of the sodium-sulfur battery which is being operated is substantially constant in a case where the operation is not in the vicinity of the end of the charging or the discharging, but the voltage clearly rises in the vicinity of the end of the charging, and clearly drops in the vicinity of the end of the discharging.

In the control method of the sodium-sulfur battery according to the present invention, it is preferable that the output of the power generation device in which the output fluctuates is preferentially assigned to the specified sodium-sulfur battery up to an allowable maximum input to charge the specified sodium-sulfur battery.

For example, in a case where a rated input power of one sodium-sulfur battery is 2 MW and the output of the power generation device in which the output fluctuates is 5 MW, 2 MW is assigned to the specified sodium-sulfur battery up to the allowable maximum input of one sodium-sulfur battery to charge the specified sodium-sulfur battery. In a case where the output of the power generation device in which the output fluctuates is 2 MW or less or the allowable maximum input of one sodium-sulfur battery or less, all of the outputs is assigned to the specified sodium-sulfur battery to charge the battery.

In the control method of the sodium-sulfur battery according to the present invention, it is preferable that an order of priority to correct or reset the discharge capacity control value is beforehand set to the plurality of sodium-sulfur batteries, and the order of priority of the sodium-sulfur battery in which the discharge capacity control value has been corrected or reset is lowered to the last order thereafter. In this case, it is preferable that the output of the power generation device in which the output fluctuates is assigned to the sodium-sulfur battery in the order of priority up to the allowable maximum input to charge the sodium-sulfur battery.

Moreover, "thereafter" means "after the discharge capacity control value of the sodium-sulfur battery has been corrected or reset". For example, in a case where, for example, four No. 1 to No. 4 sodium-sulfur batteries are assumed, the order of priority is beforehand set to No. 1, No. 2, No. 3 and No. 4 in order. After the discharge capacity control value of No. 1 is corrected or reset, the priority order of No. 1 is lowered to the last order, and the priority order is set to No. 2, No. 3, No. 4 and No. 1 in order. Furthermore, after the discharge capacity control value of No. 2 is corrected or reset, the priority order of No. 2 is lowered to the last order, and the priority order is set to No. 3, No. 4, No. 1 and No. 2 in order. After the discharge capacity control value of No. 3 is corrected or reset, the priority order of No. 3 is lowered to the last order, and the priority order is set to No. 4, No. 1, No. 2 and No. 3 in order. After the discharge capacity control value of No. 4 is corrected or reset, the priority order of No. 4 is lowered to the last order, and the priority order is set to the original order of No. 1, No. 2, No. 3 and No. 4. This is repeated.

In a case where the output of the power generation device in which the output fluctuates is assigned to the sodium-sulfur battery in order of priority up to the allowable maximum input to charge the sodium-sulfur battery, when the rated input power of one sodium-sulfur battery is 2 MW, the order of priority of four No. 1 to No. 4 sodium-sulfur batteries is set to the order of No. 1, No. 2, No. 3 and No. 4 and the output of the power generation device where the output fluctuates is 5 MW, 2 MW of the value is first assigned to the No. 1 sodium-sulfur battery in order to charge the battery. Subsequently, 2 MW is assigned to No. 2 sodium-sulfur battery to charge the battery. Subsequently, remaining 1 MW is assigned to the No. 3 sodium-sulfur battery to charge the battery. In the same case, when the output of the power generation device where the output fluctuates is 3 MW, 2 MW of the value is first assigned to the No. 1 sodium-sulfur battery to charge the battery. Subsequently, remaining 1 MW is assigned to the No. 2 sodium-sulfur battery to charge the battery. In the same case, when the output of the power generation device where the output fluctuates is 8 MW, 2 MW is assigned to each of all the sodium-sulfur batteries to charge the batteries.

The control method of the sodium-sulfur battery according to the present invention is preferably used in a case where the power generation device in which the output fluctuates is a natural energy power generation device in which one or two or more types of natural energy selected from the group consisting of a wind power, a sunlight and a geothermal power is used.

The control method of the sodium-sulfur battery according to the present invention is a method of controlling a plurality of sodium-sulfur batteries constituting a power storage compensation device in an interconnection system where a power generation device in which an output fluctuates is combined with the power storage compensation device to supply an electric power to a power system. In the present description, one sodium-sulfur battery constituting the plurality of sodium-sulfur batteries is a sodium-sulfur battery separated as a control unit from the other batteries. The battery is not determined by the number of single batteries, the number of module batteries, a magnitude of the output or the like. Specifically, in a case where the sodium-sulfur batteries constitute the power storage compensation device, it is assumed that the sodium-sulfur battery under control of one bidirectional converter is handled as one sodium-sulfur battery. It is preferable that all of the sodium-sulfur batteries have an equal rated capacity, but does not have to have the equal capacity.

In the control method of the sodium-sulfur battery according to the present invention, the sodium-sulfur battery in which the discharge capacity control value is to be corrected or reset is specified among the plurality of sodium-sulfur batteries, and the discharge capacity control value of the specified sodium-sulfur battery is corrected or reset. Moreover, all of the plurality of sodium-sulfur batteries is successively specified, and the correcting of the resetting of the discharge capacity control value are repeated. Therefore, without ending the charging or the discharging of all of the sodium-sulfur batteries simultaneously, the deviation between the actual discharge capacity and the control value can be eliminated from all of the sodium-sulfur batteries. Therefore, the discharge capacities (or the remaining capacities) of the plurality of sodium-sulfur batteries constituting the power storage compensation device are precisely controlled. A problem that the charging suddenly ends and the charging cannot be continued, or a problem that the discharging suddenly ends, the discharging cannot be continued and output fluctuations of the natural energy power generation device cannot be compensated does not occur.

The output fluctuations of the natural energy power generation device can be compensated continuously for a long period by the power storage compensation device using the sodium-sulfur battery controlled by the control method of the sodium-sulfur battery according to the present invention. Therefore, reliability of a long-period operation of the interconnection system remarkably improves.

According to the control method of the sodium-sulfur battery of the present invention, the discharge capacity control values of all of the plurality of sodium-sulfur batteries are corrected or reset. Therefore, since a preliminary line of the sodium-sulfur batteries does not have to be disposed, a more inexpensive power storage compensation device can be constructed, and the interconnection system has an excellent cost aspect.

According to the control method of the sodium-sulfur battery of the present invention, when the deviation between the actual discharge capacity and the control value is eliminated from all of the plurality of sodium-sulfur batteries, fluctuations of a degree of the deviation between the actual discharge capacity and the control value among the sodium-sulfur batteries are eliminated.
Therefore, a problem that the sodium-sulfur batteries (the power storage compensation device) stop while the output fluctuations of the natural energy power generation device are compensated does not easily occur.

### BRIEF DESCRIPTION OF THE DRAWINGS

FIG. 1 is a system constitution diagram showing one example of an interconnection system having a power generation device in which an output fluctuates and a power storage compensation device;
FIG. 2 is a graph showing a correlation between a remaining capacity ratio (%) and a voltage (V) of a sodium-sulfur battery;
FIG. 3 is a graph showing one example of a time-series change of an electric power generated by a wind power generation device;
FIG. 4 is a graph showing a conventional control method of a sodium-sulfur battery, and showing one example of a time-series change of an electric power for use in charging each of a plurality of sodium-sulfur batteries;
FIG. 5 is a graph showing a control method of a sodium-sulfur battery according to the present invention, and showing one example of a time-series change of an electric power for use in charging each of a plurality of sodium-sulfur batteries; and
FIG. 6 is a graph showing one example of an electric power to be supplied from the interconnection system to a power system.

### DETAILED DESCRIPTION OF THE INVENTION

Embodiments of the present invention will hereinafter be described appropriately with reference to the drawings, but the present invention is not limited to these embodiments when interpreted. The present invention can variously be changed, modified, improved and replaced based on knowledge of a person skilled in the art without departing from the scope of the present invention. For example, the drawings show preferable embodiments of the present invention, but the present invention is not limited to configurations and information shown in the drawings. To implement or verify the present invention, means similar or equivalent to means described in the present description can be applied, but preferable means are the following means.

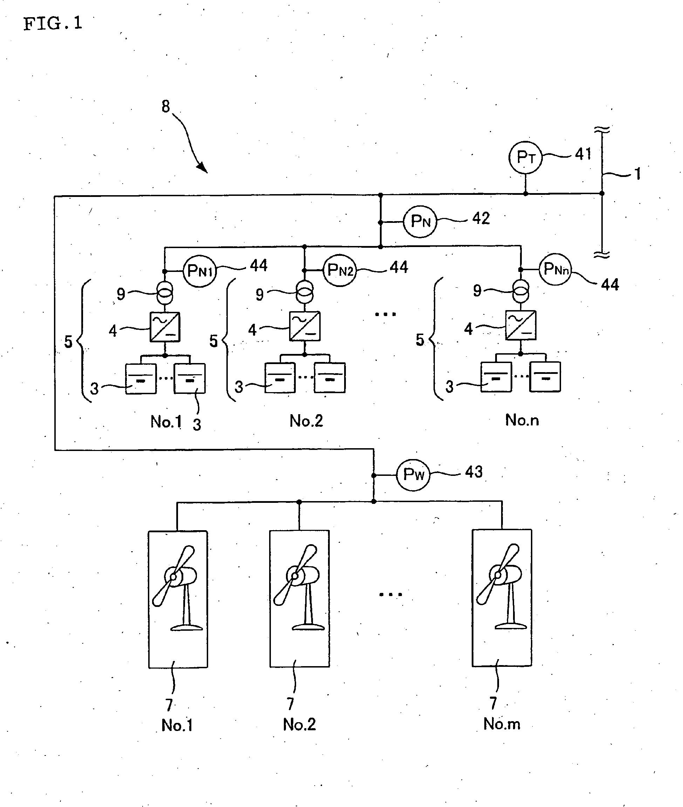

First, an interconnection system will be described. In a system constitution diagram shown in FIG. 1, one example of the interconnection system having a power generation device in which an output fluctuates and a power storage compensation device is shown. An interconnection system 8 shown in FIG. 1 has wind power generation devices 7 (natural energy power generation devices) which convert a power of wind into rotation of a windmill to rotate a power generator and power storage compensation devices 5. Moreover, each of the power storage compensation devices 5 includes sodium-sulfur batteries 3 as secondary batteries capable of storing and outputting an electric power, a bidirectional converter 4 having a direct-current/alternate-current converting function and a transformer 9. The bidirectional converter 4 may include, for example, a chopper and/or an inverter. The interconnection system 8 is provided with m lines of No. 1 to No. m (m is an integer larger than 1) of wind power generation devices 7, and n lines of No. 1 to No. n (n is an integer larger than 1) of sodium-sulfur batteries 3 (power storage compensation devices 5).

It is to be noted that as described above, the sodium-sulfur batteries 3 included in one power storage compensation device 5 are handled as one sodium-sulfur battery 3 as a whole. Usually in the interconnection system, a private power generator is added as another power generation device, and an auxiliary machine such as a heater of the sodium-sulfur battery is disposed as a load, but they are omitted from the interconnection system 8. They may be considered to be included (added or subtracted) in the electric power generated by the power generation device (the wind power generation device 7) in which the output fluctuates in the control method of the sodium-sulfur battery according to the present invention.

In the interconnection system 8, the sodium-sulfur battery 3 is discharged in the power storage compensation device 5, and an electric power P_{N} measured with a power meter 42 compensates for an output fluctuation of an electric power (an electric power P_{W} measured with a power meter 43) generated by the wind power generation device 7. Specifically, the discharging (i.e., the electric power P_{N}) of the sodium-sulfur battery 3 is controlled so that the electric power (an electric power P_{T} measured with a power meter 41) output from the whole interconnection system 8 satisfies P_{T} = P_{W}+P_{N} = constant (P_{N} = P_{T}-P_{W}). In consequence, the electric power P_{T} output from the whole interconnection system 8 is supplied as an electric power having a stable quality to, for example, a power system 1 between a power supply transformer station and an electricity demand household.

Moreover, in the interconnection system 8, the power storage compensation device 5 charges the sodium-sulfur battery 3 in accordance with the output fluctuation of the electric power P_{W} generated by the wind power generation device 7. Specifically, the charging (i.e., the electric power-P_{N}) of the sodium-sulfur battery 3 is controlled so that the electric power P_{N} measured with the power meter 42 satisfies P_{N} = -P_{W}. In consequence, the fluctuating electric power P_{W} is consumed, and the electric power P_{T} output from the whole interconnection system 8 can be zeroed.

In either case where the sodium-sulfur battery 3 is discharged or charged, the power storage compensation device 5 changes a control target value of the bidirectional converter 4 based on the output (the electric power P_{W}) from the wind power generation device 7 so as to input or output an electric power which compensates for the output of the wind power generation device. In consequence, the sodium-sulfur battery 3 is charged or discharged to absorb the output fluctuation of the wind power generation device 7. The electric power having the stable good quality can be supplied using the natural energy power generation device (the wind power generation device 7) and the sodium-sulfur battery 3 (the power storage compensation device 5) which scarcely discharge carbon dioxide. Therefore, it can be said that the interconnection system 8 is a preferable power generation system.

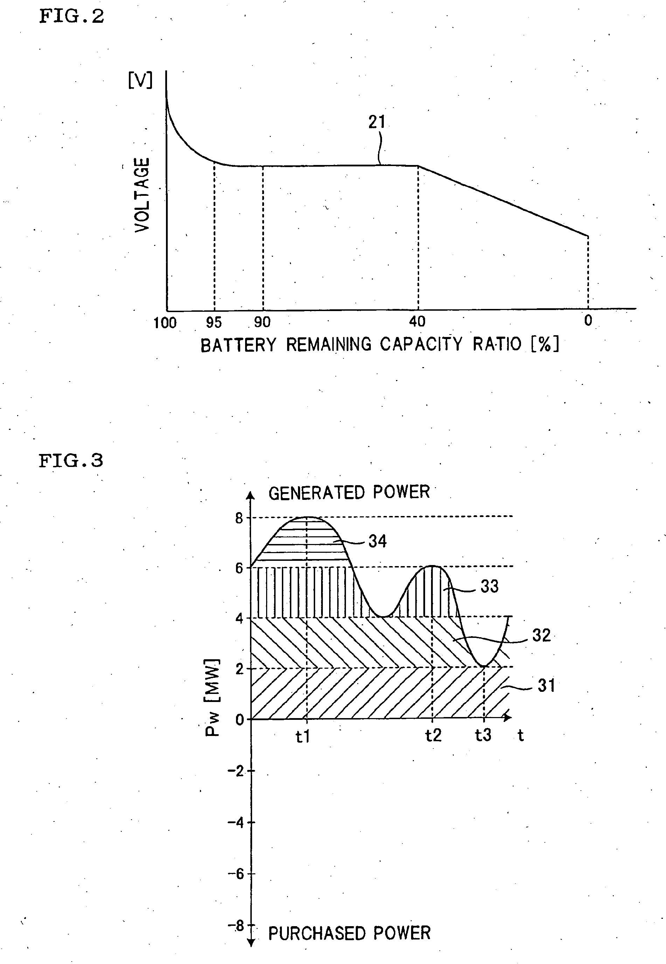

Next, control of the sodium-sulfur battery 3 will be described with reference to FIGS. 3 to 6 in a case where the sodium-sulfur battery 3 is charged in the interconnection system 8 shown in FIG. 1 while keeping, at zero, the electric power P_{T} to be exchanged with the system. It is to be noted that FIGS. 3 to 6 show time-series changes of an electric power (an output) in a case where four (n = 4) lines of the sodium-sulfur batteries 3 (the power storage compensation devices 5) are disposed in the interconnection system 8. In FIGS. 3 to 6, the abscissa is a time axis, and indicates time t. The sodium-sulfur battery 3 (the power storage compensation device 5) includes four units No. 1 to No. 4, and a rated input power of one sodium-sulfur battery 3 is 2 MW.

FIG. 3 is a graph showing one example of the output of the wind power generation device 7. In FIG. 3, the ordinate indicates the electric power P_{w} measured with the power meter 43. For example, P_{W} = 8 MW at time t1, P_{w} = 6 MW at time t2 and P_{W} = 2 MW at time t3.

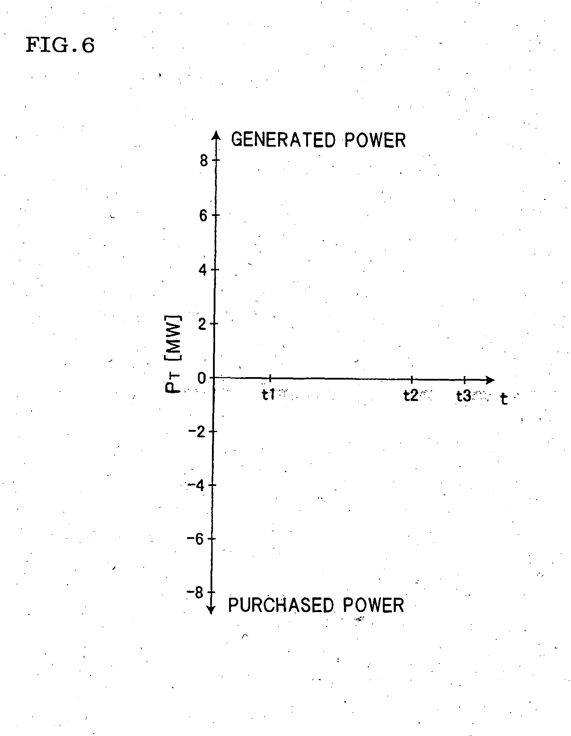

FIG. 6 is a graph showing one example of an output from the whole interconnection system 8 to the power system 1 in the same time zone as that of FIG. 3. In FIG. 6, the ordinate indicates the electric power P_{T} measured with the power meter 41, and constantly the electric power P_{T} = 0.

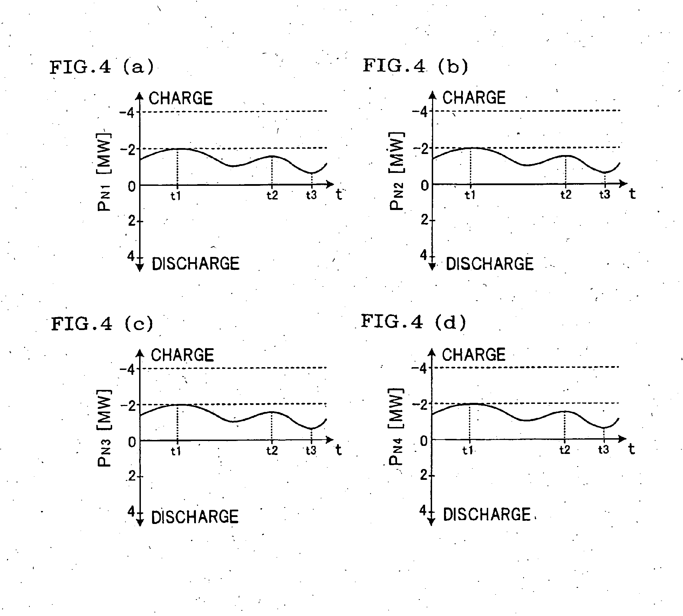

FIG. 4 is a graph showing one example of an output (a minus output is indicated because the battery is charged, that is, the output corresponds to an input) of each of four sodium-sulfur batteries 3 (power storage compensation devices 5) in the same time zone as that of FIG. 3. In FIG. 4, conventional control of charging of the sodium-sulfur battery is shown. In FIG. 4, the ordinate indicates electric powers P_{N1} to P_{N4} measured with power meters 44. FIG. 4(a) indicates a time-series change of the electric power of the No. 1 sodium-sulfur battery 3 (the power storage compensation device 5), (b) indicates a time-series change of the electric power of the No. 2 sodium-sulfur battery 3 (the power storage compensation device 5), (c) indicates a time-series change of the electric power of the No. 3 sodium-sulfur battery 3 (the power storage compensation device 5), and (d) indicates a time-series change of the electric power of the No. 4 sodium-sulfur battery 3 (the power storage compensation device 5).

Heretofore, four sodium-sulfur batteries 3 (power storage compensation devices 5) are collectively controlled. To obtain the electric power P_{T} = 0 as shown in FIG. 4, absolute values of the electric powers P_{N1} to P_{N4} are obtained by dividing the electric power P_{W} shown in FIG. 3 into four equal values. For example, P_{N1} to P_{N4} = -2 MW at time t1, P_{N1} to P_{N4} = -1.5 MW at time t2 and P_{N1} to P_{N4} = -0.5 MW at time t3.

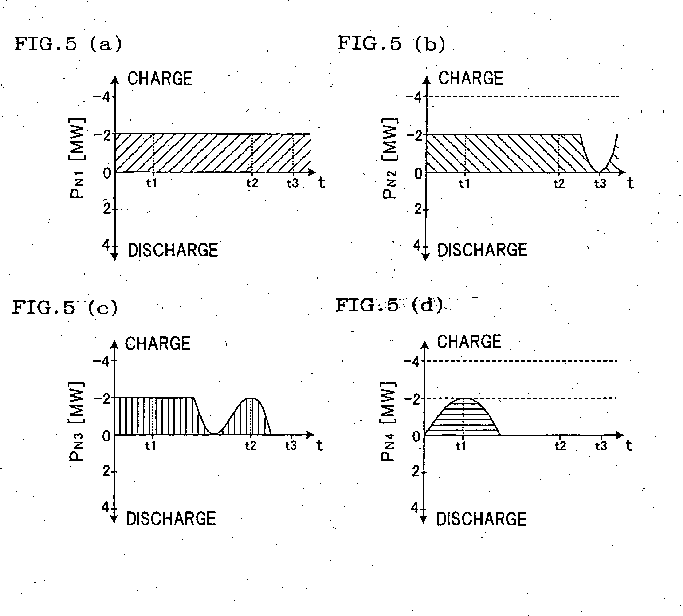

On the other hand, according to the control method of the sodium-sulfur battery of the present invention, to obtain the electric power P_{T} = 0, the charging of the sodium-sulfur battery 3 is controlled so as to indicate time-series changes of the electric powers P_{N1} to P_{N4} as shown in FIG. 5. In the same manner as in FIG. 4, FIG. 5 is a graph showing one example of an output (a minus output is indicated because the battery is charged, that is, the output corresponds to the input) of each of four sodium-sulfur batteries 3 (power storage compensation devices 5) in the same time zone as that of FIG. 3. In FIG. 5, the ordinate indicates the electric powers P_{N1} to P_{N4} measured with the power meters 44 in the same manner as in FIG. 4. FIG. 5(a) indicates a time-series change of the electric power of the No. 1 sodium-sulfur battery 3 (the power storage compensation device 5), (b) indicates a time-series change of the electric power of the No. 2 sodium-sulfur battery 3 (the power storage compensation device 5), (c) indicates a time-series change of the electric power of the No. 3 sodium-sulfur battery 3 (the power storage compensation device 5), and (d) indicates a time-series change of the electric power of the No. 4 sodium-sulfur battery 3 (the power storage compensation device 5).

To realize the (minus) outputs (the electric powers P_{N1} to P_{N4}) as shown in FIG. 5 in the No. 1 to No. 4 sodium-sulfur batteries 3 (power storage compensation devices 5), an order of priority of No. 1, No. 2, No. 3 and No. 4 is set to the No. 1 to No. 4 sodium-sulfur batteries 3. Even when the electric power P_{W} changes in a time series, the power may constantly be assigned to the batteries in order of priority up to 2 MW at maximum in order to charge the batteries. Specifically, with regard to the electric power P_{W}, an electric power of a range 31 (a left lowering hatched portion) shown in FIG. 3 is assigned to the No. 1 sodium-sulfur battery 3, an electric power of a range 32 (a right lowering hatched portion) is assigned to the No. 2 sodium-sulfur battery 3, an electric power of a range 33 (a vertical line portion) is assigned to the No. 3 sodium-sulfur battery 3, and an electric power of a range 34 (a horizontal line portion) is assigned to the No. 4 sodium-sulfur battery 3. As a result of such assignment, in FIG. 5, P_{N1} to P_{N4} = -2 MW at time t1, but P_{N1} to P_{N3} = -2 MW, PN₄ = 0 at time t2, and P_{N1} = -2 MW, PN₂ to PN₄ = 0 at time t3. It is to be noted that to assign the electric power P_{W} generated by the wind power generation device 7 to each sodium-sulfur battery 3 to charge the battery, the control target value of the bidirectional converter 4 of each power storage compensation device 5 may be changed based on the electric power P_{W}.

When the No. 1 to No. 4 sodium-sulfur batteries 3 are controlled as described above, the No. 1 sodium-sulfur battery 3 having a high order of priority is preferentially charged, and first comes close to the end of the charging (in the case of discharging, the No. 1 sodium-sulfur battery 3 having the high order of priority is similarly preferentially discharged, and first comes close to the end of the discharging). When the battery comes close to the end of the charging, the battery voltage rises. Therefore, this phenomenon can be detected to correct or reset the discharge capacity control value of the No. 1 sodium-sulfur battery 3.

FIG. 2 is a graph showing a correlation between a battery remaining capacity ratio (also referred to simply as the remaining capacity ratio) and a battery voltage (V) in the sodium-sulfur battery 3. The remaining capacity ratio indicates a ratio (%) of a dischargeable capacity (Ah) with respect to a rated capacity (Ah) of the sodium-sulfur battery. Therefore, the discharge capacity (Ah) which is an already discharged capacity is obtained by the rated capacity (Ah) x (100-the remaining capacity ratio (%).). As apparent from a correlation curve 21 of FIG. 2, a (general) characteristic of the sodium-sulfur battery is that the battery voltage (also referred to simply as the voltage) is maintained to be constant irrespective of the remaining capacity ratio in a range of approximately 40 to 90%. Moreover, when the charging proceeds and the remaining capacity ratio is approximately 95% (e.g., the discharge capacity is approximately 5% of the rated capacity), the voltage rises. Therefore, in a case where a relation between a value of the voltage and the discharge capacity at a time when the voltage rises is set beforehand, when the charging proceeds to reach the voltage, the discharge capacity control value can be corrected (reset). It is to be noted that as seen from FIG. 2, since the voltage changes (drops) even at the end of the discharging, the discharge capacity control value can similarly be corrected (or reset) at the end of the discharging.

When the correction (resetting) of the discharge capacity control value of the No. 1 sodium-sulfur battery 3 is completed, the order of priority of the No. 1 sodium-sulfur battery is lowered to the last order, and the order of priority of the No. 1 to No. 4 sodium-sulfur batteries 3 is set to the order of No. 2, No. 3, No. 4 and No. 1. Moreover, based on the new order of priority, the electric power P_{W} is assigned to the No. 1 to No. 4 sodium-sulfur batteries 3 constantly up to 2 MW at maximum in order to charge the batteries. In this case, the No. 2 sodium-sulfur battery 3 having a high order of priority is preferentially charged and first comes close to the end of the charging. The rise of the voltage can be detected to correct (reset) the discharge capacity control value of the No. 2 sodium-sulfur battery 3. Moreover, the order of priority of the No. 2 sodium-sulfur battery is lowered to the last order. Subsequently, the order of priority may similarly be changed to repeatedly correct (reset) the discharge capacity control value of the sodium-sulfur battery 3.

In the above description, the order of priority is set to four No. 1 to No. 4 sodium-sulfur batteries, but it is important that at least one sodium-sulfur battery 3 to which the electric power P_{W} generated by the wind power generation device 7 is to be preferentially assigned is specified among the four sodium-sulfur batteries 3. As a result of the preferential assignment of the electric power P_{W}, since the specified sodium-sulfur battery 3 proceeds with the charging and first reaches the end of the charging, the discharge capacity control value can be corrected (reset).

In addition, when the order of priority is set, the order to correct (reset) the discharge capacity control value can clearly be controlled. Alternatively, as shown in FIGS. 3 and 5, even with respect to the sodium-sulfur battery 3 which does not have the first order of priority, the electric power P_{W} is more assigned in accordance with the order of priority. Therefore, when the order of priority is set, the order to reach the end of the charging does not easily deviate. In these respects, it is more preferable that the order of priority is set to four No. 1 to No. 4 sodium-sulfur batteries 3 as compared with a case where the sodium-sulfur battery 3 to which the electric power P_{W} is to be preferentially assigned is simply specified.

A control method of a sodium-sulfur battery according to the present invention can be utilized as a method of controlling a plurality of sodium-sulfur batteries constituting a power storage compensation device in an interconnection system where natural energy such as a wind power, a sunlight or a geothermal power is used and a power generation device in which an output fluctuates is combined with the power storage compensation device to supply an electric power to a power system.

## Claims

1. A control method of a plurality of sodium-sulfur batteries, comprising:
providing an interconnection system where a power generation device in which the output fluctuates is combined with a power storage compensation device to supply an electric power to a power system, the plurality of sodium-sulfur batteries comprising the power storage compensation device and compensating a fluctuation of an output of the power generation device,
specifying the sodium-sulfur battery in which a discharge capacity control value is to be corrected or reset, among the plurality of sodium-sulfur batteries;
correcting or resetting the discharge capacity control value of the specified sodium-sulfur battery; and
successively specifying all of the plurality of sodium-sulfur batteries to repeatedly correct or reset the discharge capacity control value.

2. The control method of the sodium-sulfur battery according to claim 1, wherein a vicinity of the end of charging or discharging is detected to correct or reset the discharge capacity control value.

3. The control method of the sodium-sulfur battery according to claim 2, wherein the vicinity of the end of the charging or the discharging is detected based on a voltage of the battery which is being operated.

4. The control method of the sodium-sulfur battery according to claim 3, wherein the vicinity of the end of the charging is detected in a case where a discharge capacity is larger than 0% and less than 10% of a battery rated capacity, and the vicinity of the end of the discharging is detected in a case where the discharge capacity is larger than 60% and less than 100% of the battery rated capacity.

5. The control method of the sodium-sulfur battery according to any one of claims 1 to 4, wherein the output of the power generation device in which the output fluctuates is preferentially assigned to the specified sodium-sulfur battery up to an allowable maximum input to charge the specified sodium-sulfur battery.

6. The control method of the sodium-sulfur battery according to any one of claims 1 to 5, wherein an order of priority to correct or reset the discharge capacity control value is beforehand set to the plurality of sodium-sulfur batteries, and the order of priority of the sodium-sulfur battery in which the discharge capacity control value has been corrected or reset is lowered to the last order thereafter.

7. The control method of the sodium-sulfur battery according to claim 6, wherein the output of the power generation device in which the output fluctuates is assigned to the sodium-sulfur battery in the order of priority up to the allowable maximum input to charge the sodium-sulfur battery.

8. The control method of the sodium-sulfur battery according to any one of claims 1 to 7, wherein the power generation device in which the output fluctuates is a natural energy power generation device in which one or two or more types of natural energy selected from the group consisting of a wind power, a sunlight and a geothermal power is used.

## Patentansprüche

1. Verfahren zur Steuerung einer Vielzahl von Natrium-Schwefel-Batterien, umfassend:
die Bereitstellung eines Verbindungssystems, bei dem eine Energieerzeugungsvorrichtung, in welcher das Ausgangssignal schwankt, mit einer Energiespeicherungs-Kompensationsvorrichtung kombiniert ist, um elektrische Energie in ein Energiesystem einzuspeisen, wobei die Vielzahl an Natrium-Schwefel-Batterien die Energiespeicherungs-Kompensationsvorrichtung umfasst und eine Schwankung des Ausgangssignals der Energieerzeugungsvorrichtung kompensiert,
die Spezifizierung der Natrium-Schwefel-Batterie, für die ein Entladungskapazitäts-Steuerungswert unter der Vielzahl an Natrium-Schwefel-Batterien zu korrigieren oder zurückzusetzen ist;
das Korrigieren oder Zurücksetzen des Entladungskapazitäts-Steuerungswerts der spezifizierten Natrium-Schwefel-Batterie; und
die nacheinander erfolgende Spezifizierung der gesamten Vielzahl an Natrium-Schwefel-Batterien um den Entladungskapazitäts-Steuerungswert wiederholt zu korrigieren oder zurückzusetzen.

2. Verfahren zur Steuerung einer Natrium-Schwefel-Batterie nach Anspruch 1, worin das nahende Ende der Ladung oder Entladung detektiert wird, um den Entladungskapazitäts-Steuerungswert zu korrigieren oder zurückzusetzen.

3. Verfahren zur Steuerung einer Natrium-Schwefel-Batterie nach Anspruch 2, worin das nahende Ende der Ladung oder Entladung basierend auf der Spannung der betriebenen Batterie detektiert wird.

4. Verfahren zur Steuerung einer Natrium-Schwefel-Batterie nach Anspruch 3, worin das nahende Ende der Ladung für einen Fall detektiert wird, bei dem die Entladungskapazität größer als 0 % und weniger als 10 % der Nennbatteriekapazität ist und das nahende Ende der Entladung für einen Fall detektiert wird, bei dem die Entladungskapazität größer als 60 % und weniger als 100 % der Nennbatteriekapazität ist.

5. Verfahren zur Steuerung einer Natrium-Schwefel-Batterie nach einem der Ansprüche 1 bis 4, worin das Ausgangssignal der Energieerzeugungsvorrichtung, in welcher das Ausgangssignal schwankt, vorzugsweise der spezifizierten Natrium-Schwefel-Batterie bis zu einem maximal zulässigen Eingangssignal zugeordnet wird, um die spezifizierte Natrium-Schwefel-Batterie zu laden.

6. Verfahren zur Steuerung einer Natrium-Schwefel-Batterie nach einem der Ansprüche 1 bis 5, worin eine Rangordnung zum Korrigieren oder Zurückzusetzen des Entladungskapazitäts-Steuerungswerts für die Vielzahl an Natrium-Schwefel-Batterien zuvor eingestellt wird und die Rangordnung der Natrium-Schwefel-Batterie, in welcher der Entladungskapazitäts-Steuerungswert korrigiert oder zurückgesetzt wurde, auf den danach folgende letzten Rang heruntergesetzt wird.

7. Verfahren zur Steuerung einer Natrium-Schwefel-Batterie nach Anspruch 6, worin das Ausgangssignal der Energieerzeugungsvorrichtung, in welcher das Ausgangssignal schwankt, der Natrium-Schwefel-Batterie in der Rangordnung bis zum maximal zulässigen Eingangssignal zugeordnet wird, um die Natrium-Schwefel-Batterie zu laden.

8. Verfahren zur Steuerung einer Natrium-Schwefel-Batterie nach einem der Ansprüche 1 bis 7, worin die Energieerzeugungsvorrichtung, in welcher das Ausgangssignal schwankt, eine natürliche Energieerzeugungsvorrichtung ist, worin ein oder zwei oder mehr Typen von natürlichen Energiequellen ausgewählt aus der aus Windenergie, Sonnenlicht- und geothermischer Energie bestehenden Gruppe eingesetzt werden.

## Revendications

1. Procédé de contrôle d'une pluralité de batteries au sodium-soufre, comprenant:
réaliser un système d'interconnection dans lequel un dispositif de génération de puissance dans lequel la sortie fluctue est combiné avec un dispositif de compensation de stockage de puissance pour fournir une puissance électrique à un système de puissance, la pluralité de batteries au sodium-soufre comprenant le dispositif de compensation de stockage de puissance et compensant une fluctuation d'une sortie du dispositif de génération de puissance,
spécifier la batterie au sodium-soufre dans laquelle une valeur de commande de capacité de décharge doit être corrigée ou rétablie, parmi la pluralité de batteries au sodium-soufre;
corriger ou remettre à l'état initial la valeur de commande de la capacité de décharge de la batterie au sodium-soufre spécifiée; et
spécifier successivement toutes de la pluralité de batteries au sodium-soufre pour corriger ou remettre à l'état initial à plusieurs reprises la valeur de commande de la capacité de décharge.

2. Procédé de contrôle de la batterie au sodium-soufre selon la revendication 1, dans lequel un voisinage de l'extrémité de charge ou de décharge est détecté pour corriger ou remettre à l'état initial la valeur de commande de la capacité de décharge.

3. Procédé de contrôle de la batterie au sodium-soufre selon la revendication 2, dans lequel le voisinage de l'extrémité de charge ou de décharge est détecté sur la base d'une tension de la batterie qui est en fonctionnement.

4. Procédé de contrôle de la batterie au sodium-soufre selon la revendication 3, dans lequel le voisinage de l'extrémité de charge est détecté dans un cas où une capacité de décharge est supérieure à 0% et inférieure à 10% d'une capacité nominale de batterie, et le voisinage de l'extrémité de la décharge est détecté dans un cas où la capacité de décharge est supérieure à 60% et inférieure à 100% de la capacité nominale de la batterie.

5. Procédé de contrôle de la batterie au sodium-soufre selon l'une quelconque des revendications 1 à 4, dans lequel la sortie du dispositif de génération de puissance dans lequel la sortie fluctue est de préférence attribuée à la batterie au sodium-soufre spécifiée jusqu'à une entrée maximale autorisée pour charger la batterie au sodium-soufre spécifiée.

6. Procédé de contrôle de la batterie au sodium-soufre selon l'une quelconque des revendications 1 à 5, dans lequel un ordre de priorité pour corriger ou remettre à l'état initial la valeur de commande de la capacité de décharge est réglé préalablement pour la pluralité de batteries au sodium-soufre, et l'ordre de priorité de la batterie au sodium-soufre, dans laquelle la valeur de commande de capacité de décharge a été corrigée ou remise à l'état initial est abaissé au dernier ordre ensuite.

7. Procédé de contrôle de la batterie au sodium-soufre selon la revendication 6, dans lequel la sortie du dispositif de génération de puissance dans lequel la sortie fluctue est attribuée à la batterie au sodium-soufre dans l'ordre de priorité jusqu'à l'entrée maximale autorisée pour charger la batterie au sodium-soufre.

8. Procédé de contrôle de la batterie au sodium-soufre selon l'une quelconque des revendications 1 à 7, dans lequel le dispositif de génération de puissance dans lequel la sortie fluctue est un dispositif de génération de puissance d'énergie naturelle dans lequel un ou deux ou plusieurs types d'énergie naturelle sélectionnés dans le groupe consistant en puissance du vent, lumière du soleil et puissance géothermique est utilisé.
